# EUROPÄISCHE PATENTSCHRIFT

(11) **EP 2 940 368 B1**
(45) Veröffentlichungstag und Bekanntmachung des Hinweises auf die Patenterteilung: **26.09.2018**
(21) Anmeldenummer: 15161855.0
(22) Anmeldetag: 31.03.2015
(51) Int. Cl.: F16M 11/18, F16M 11/10, F16M 13/02, F16M 11/28, F16M 11/42

(54) **HALTERUNG**
MOUNT
FIXATION

(30) Priorität: 31.03.2014 DE 202014101514 U
(43) Veröffentlichungstag der Anmeldung: 04.11.2015
(73) Patentinhaber: Haase, Alexander, 80798 München (DE)
(72) Erfinder: Haase, Alexander, 80798 München (DE)
(74) Vertreter: Alber, Norbert

(56) Entgegenhaltungen:
- WO-A2-2006/124785
- DE-U1- 20 102 947
- US-A1- 2002 194 792
- US-A1- 2004 178 312
- US-A1- 2008 259 541
- US-A1- 2014 034 802
- US-B1- 6 659 777
- US-B1- 7 377 475

## Beschreibung

### I. Anwendungsgebiet

Die Erfindung betrifft eine Halterung zur flexiblen Positionierung eines Einrichtungsgegenstandes, insbesondere eines Bildschirmes.

### II. Technischer Hintergrund

Nicht immer ist es möglich, einen Einrichtungsgegenstand im allgemeinen Raumgefüge dauerhaft an dem Ort zu positionieren, an dem er seinen Zweck am besten erfüllen kann. Bereits in der Vergangenheit wurden daher verschiedene Lösungen entwickelt, um diese Aufgabe, insbesondere im Bezug auf einen Bildschirm, welcher von einem bestimmten Standpunkt aus gut einsehbar sein sollte, zu lösen.

Vorhandene Lösungen umfassen zu diesem Zweck in der Regel eine Halterung, welche an einer seitlichen Wand fixiert sind und über einen Schwenkarm verbunden eine Haltevorrichtung in Form einer Aufnahmefläche oder einer Befestigungsvorrichtung bietet. Hierdurch ist es möglich, den Bildschirm um eine vertikale Drehachse manuell in seiner Ausrichtung zu verändern.

Dieser Bildschirm kann jedoch zum einen nur an einer Stelle positioniert werden, bei welcher eine seitliche Wand zur Befestigung vorhanden ist. Nicht geeignet sind beispielsweise lange Fensterfronten oder Wandschrägen oder auch eine Positionierung im freien Raum.

Zum anderen ist der Bildschirm an seine durch den Schwenkarm vorgegebene Position gebunden und kann nicht ohne weiteres weiter von dieser entfernt verwendet werden.

Zudem wirkt der Anblick des schwarzen Bildschirms in ausgeschaltetem Zustand optisch oft störend.

In diesem Zusammenhang ist es aus dem Stand der Technik bekannt, den Bildschirm an einer von oben herabreichenden Haltestange zu befestigen, die mit ihrem oberen Ende an einem Führungsschlitten befestigt ist, der entlang von zum Beispiel an der Decke eines Raumes verlaufenden Führungen verfahrbar ist.

So zeigt die US 2002/0194792 A1 - die den nächstreichenden Stand der Technik bildet - eine solche Lösung, bei der zusätzlich auch noch die Führungsschiene, in der der Führungsschlitten verfahrbar ist, selbst wiederum an ihren seitlichen Enden in weiteren Führungsschienen in einer zweiten horizontalen Richtung verfahrbar ist, und die vertikal verlaufende Haltestange teleskopierbar ist, so dass der Bildschirm - sowie die in dieser Schrift zusätzlich an der Haltestange unter dem Bildschirm vorhandene Arbeitsplatte - auf unterschiedlichen Höhen positioniert werden kann.

Auch eine Drehung des Bildschirmes um die Erstreckungsrichtung der vertikalen Haltestange herum ist vorgesehen.

Darüber hinaus zeigen die US 7,377,475 B1 und die US 2014/0034802 A1 Lösungen, bei denen am unteren Ende der Haltestange im Gegensatz zu US 2002/194792 A1 nur ein Bildschirm und keine Arbeitsplatte vorhanden ist, die Bewegungen des Bildschirmes in der Horizontalen als auch der Vertikalen jedoch motorisch und mittels Fernsteuerung ansteuerbar durchgeführt werden können, wobei die letztgenannte Schrift den Schwerpunkt auf die Kabelzuführung entlang der Führungsschiene legt.

Etwa den gleichen Offenbarungsumfang besitzen die US 2008/0259541 und die WO 2006/124785 A2, wobei in diesen beiden Schriften die Nachführung des Kabels in oder entlang der Führungsschiene mittels einer sogenannten Kabelkette durchgeführt wird.

Ferner zeigt die US 2004/0178312 A1 eine Monitorhalterung, bei der jedoch anstelle einer vertikal verlaufenden Haltestelle ein mehrteiliger, aufwändiger und zur Seite hin auskragender Gelenkarm vorgesehen ist.

Des Weiteren ist aus der US 6659777 eine Haltevorrichtung für ein beispielsweise Notebook bekannt, welches in einem Kraftfahrzeug montiert werden soll. Dabei verläuft eine Führungsschiene im Innenraum von der linken zur rechten Seitenwand des Kraftfahrzeugs, und daran ist eine nach unten abragende Tragstange verschiebbar befestigt, die zusätzlich in ihrer Neigung um diese Querstange verändert werden kann.

Aus der DE 20102947 U1 ist eine an einer Führungsschiene verfahrbare Tragarm-Einheit bekannt, mittels der das am freien Ende des Tragarmes befestigte Gerät frei im Raum positioniert werden kann, jedoch mittels einer spezifischen Abfolge von Dreh- und Schwenkachsen.

### III. Darstellung der Erfindung

### a) Technische Aufgabe

Es ist daher die Aufgabe gemäß der Erfindung, eine möglichst flexible Halterung anzubieten.

### b) Lösung der Aufgabe

Diese Aufgabe wird erfindungsgemäß durch die Merkmale des Anspruch 1 gelöst. Vorteilhafte Ausführungsformen ergeben sich aus den Unteransprüchen in Verbindung mit der Beschreibung und den Zeichnungen.

Die Grundbestandteile der Halterung sind eine Führungsschiene, die am Gebäude befestigt wird, also der Decke, dem Boden oder einer Wand, und von
dem aus ein Haltearm abragt, an dessen anderem Ende mittels einer Befestigungsvorrichtung der Bildschirm befestigt werden kann.

Im Folgenden ist nur noch von einem Bildschirm die Rede, ohne die anderen Einrichtungsgegenstände, die an dessen Stelle befestigt werden könnten, auszunehmen.

Diese Halterung ist besonders universell einsetzbar, indem zum einen der Haltearm in seiner Länge verstellbar, insbesondere teleskopierbar, und zum anderen in verschiedenen Längspositionen verrastbar ist:
Wird die Führungsschiene am Boden oder an der Decke befestigt, so kann der Bildschirm dadurch auf jede gewünschte Höhe oder zumindest viele unterschiedliche definierte Höhenlagen eingestellt werden.

Ferner ist der Bildschirm drehbar, und kann damit auf die Position des potentiellen Betrachters ausgerichtet werden.

Zu diesem Zweck ist entweder die Befestigungsvorrichtung relativ zu dem Haltearm drehbar und/oder die Haltearmaufnahme, mit der der Haltearm am Führungsschlitten befestigt ist, gegenüber dem Führungsschlitten, insbesondere um die Erstreckungsrichtung des Haltearmes. Diese Drehung kann manuell oder mittels eines angebauten Motors durchgeführt werden.

Zusätzlich kann optional der Haltearm gegenüber dem Führungsschlitten um eine Neigungsachse neigbar sein, die insbesondere parallel zur Verlaufsrichtung der Führungsschiene verläuft. Dadurch kann der gesamte Haltearm nach hinten oder vorne weggeklappt werden, und der Bildschirm, wenn er in der aktivierten Position beispielsweise in einem freien Durchgang des Raumes hängt, aus dem freien Durchgang unter die Decke geklappt werden.

Auch hier kann der Neigungswinkel in zumindest mehreren Neigepositionen oder auch stufenlos eingestellt und fixiert werden. Ebenso kann auch die Befestigungsvorrichtung gegenüber dem Haltearm um eine insbesondere horizontale Neigungsachse neigbar sein, und der Bildschirm dadurch auf die Höhenlage des Betrachters ausgerichtet werden. Auch diese Neigbarkeit ist in mehreren Neigestellungen oder stufenlos einstellbar und fixierbar.

Alle Bewegungen innerhalb der Halterung können motorisch angetrieben sein und gesteuert werden insbesondere mittels einer drahtlosen Fernbedienung, die die entsprechenden Motoren über eine Steuerung ansteuert.

Die Führungsschiene kann auf unterschiedliche Art und Weise ausgebildet sein:
Im einfachsten Fall besteht sie aus einem z.B. Metallprofil, dass die in Verlaufsrichtung des Profils verlaufende Laufflächen, z.B. Nuten, aufweist, in denen der Führungsschlitten vom schlüssig in Verlaufsrichtung geführt ist.

Die Führungsschiene kann gerade verlaufen oder auch eine oder mehrere Krümmungen, also Kurven, aufweisen. In diesem Fall muss der Führungsschlitten entsprechend ausgebildet sein, um diese Kurven der Führungsschiene durchlaufen zu können.

Die Führungsschiene kann jedoch auch eine Gewindespindel sein, entlang der eine Spindelmutter als Führungsschlitten verfahrbar ist mittels Drehung Gewindespindel.

Auch die Bewegung des Führungsschlittens entlang der Führungsschiene kann manuell oder motorisch erfolgen.

Die genannten Motoren sowie weitere motorisch angetriebene Bewegungen werden allesamt durch eine Steuereinheit angesteuert, vorzugsweise drahtlos angesteuert, wobei die Steuereinheit bevorzugst mittels einer drahtlosen Fernsteuerung bedienbar ist.

Im Abstand zur Rückseite des Bildschirms ist ein Schallreflektor angeordnet sein, in Form einer Platte, gegen die die nach hinten gerichteten Lautsprecher des Bildschirms abstrahlen, sodass die davor sitzenden Betrachter eine gute akustische Wirkung haben.

Der Schallreflektor kann gleichzeitig, wenn er als vor allem durchgehende Platte oder etwa auch ein Lochblech ausgebildet ist, als optische Abdeckvorrichtung für die Befestigungsvorrichtung dienen, falls er sich auf der vom Bildschirm abgewandten Seite der Befestigungsvorrichtung befindet.

Da zu einem Bildschirm eine Signal- und/oder Stromzuführung notwendig ist, und der Weg von der tragenden Wand oder Decke zum Bildschirm sich je nach Stellung des Führungsschlittens ändert, ist eine Kabelzuführung, insbesondere in Form einer Kabelkette, optional vorzusehen, die beispielsweise bei einer Führungsschiene mit zwei beabstandeten Führungen zwischen den beiden Führungen angeordnet sein kann und somit in der Führungsschiene.

Um für einen Bildschirm einen Receiver oder ein anderes Zusatzgerät unterbringen zu können, kann an dem Führungsschlitten der Befestigung und/oder dem Haltearm und/oder der Befestigungsvorrichtung eine zusätzliche Gerätehalterung oder Ablage vorhanden sein.

Um die schwarze Fläche bei optisch ansprechender zu gestalten, kann an der Halterung, insbesondere an, über oder seitlich der Befestigungsvorrichtung, eine Frontalabdeckung vorgesehen sein, welche auf die Vorderseite des Bildschirmes verlagert werden kann durch Herumklappen oder Herabziehen. Diese Frontalabdeckung kann beispielsweise ansprechend bedruckt sein und sich in die Umgebung des Raumes optisch besser einfügen als die schwarze Fläche des ausgeschalteten Bildschirms.

### c) Ausführungsbeispiele

Ausführungsformen gemäß der Erfindung sind im Folgenden beispielhaft näher beschrieben. Es zeigen:
- Fig. **1**:: Gesamtansicht des Grundaufbaus einer Halterung,
- Fig. **2**a:: vertikale Ansicht einer ersten Halterung,

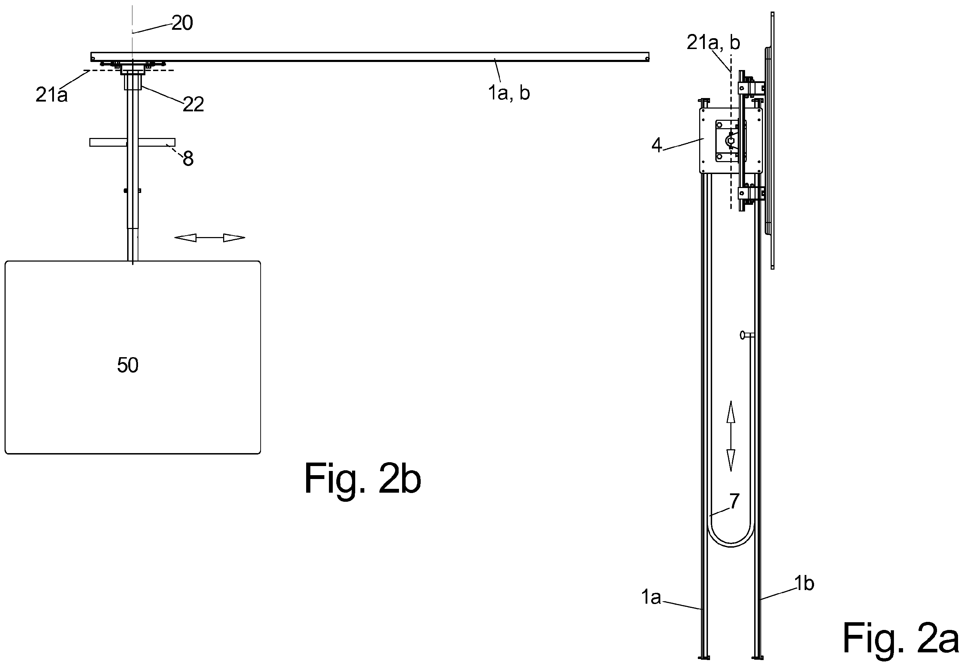

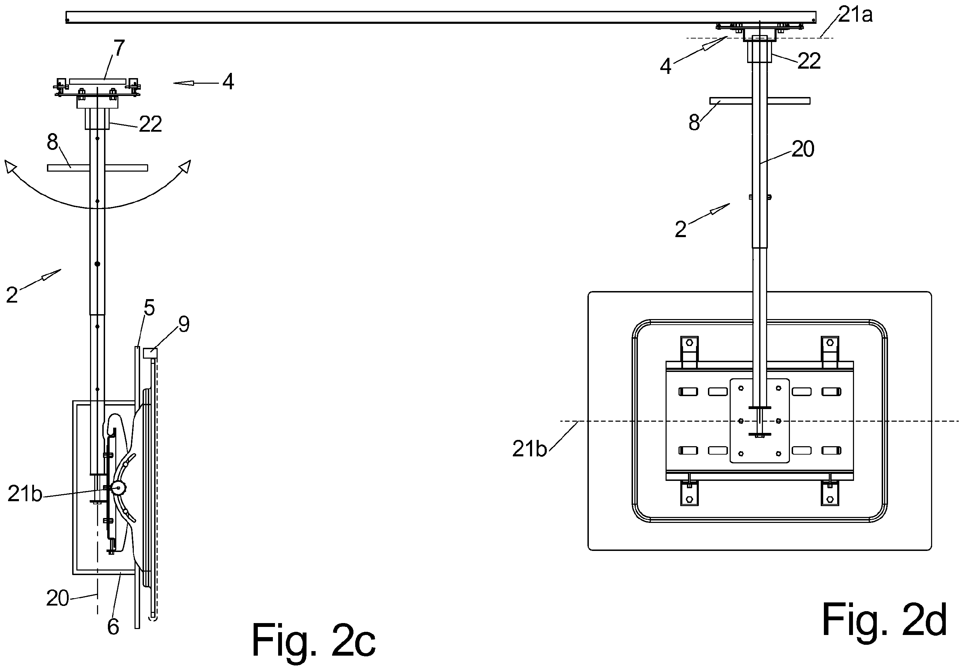

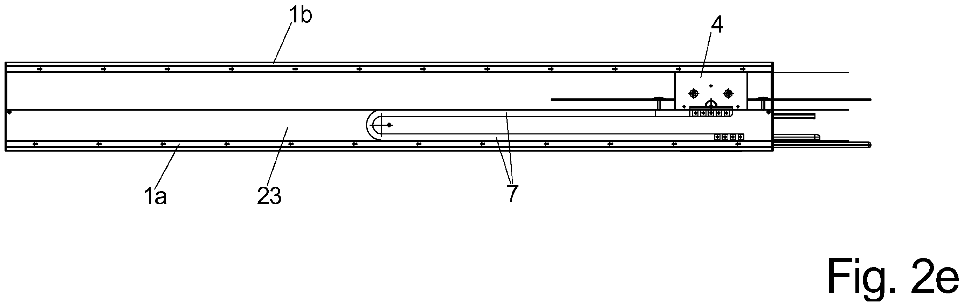

- Fig. **2**b:: Vorderansicht der ersten Halterung,
- Fig. **2**c:: Seitenansicht der ersten Halterung,
- Fig. **2**d:: Rückansicht der ersten Halterung,
- Fig. **2**e:: vertikale Ansicht einer zweiten Halterung, und

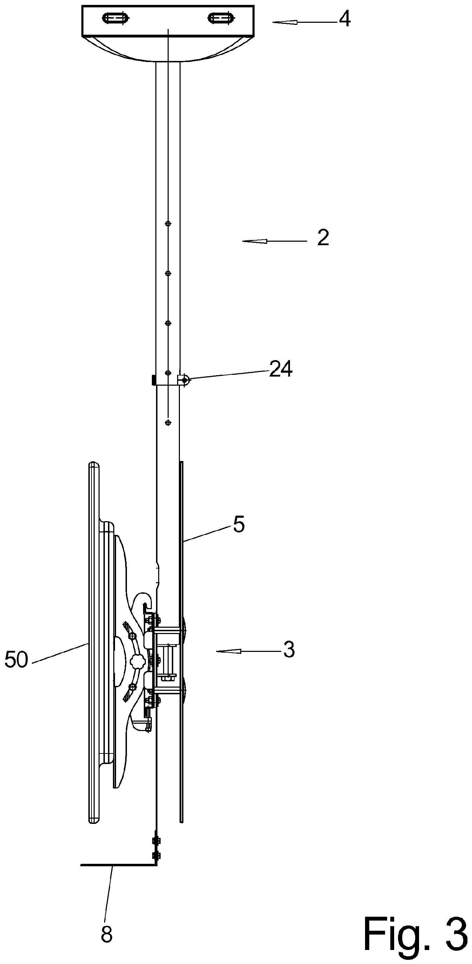

- Fig. **3**:: Seitenansicht einer zweiten Halterung

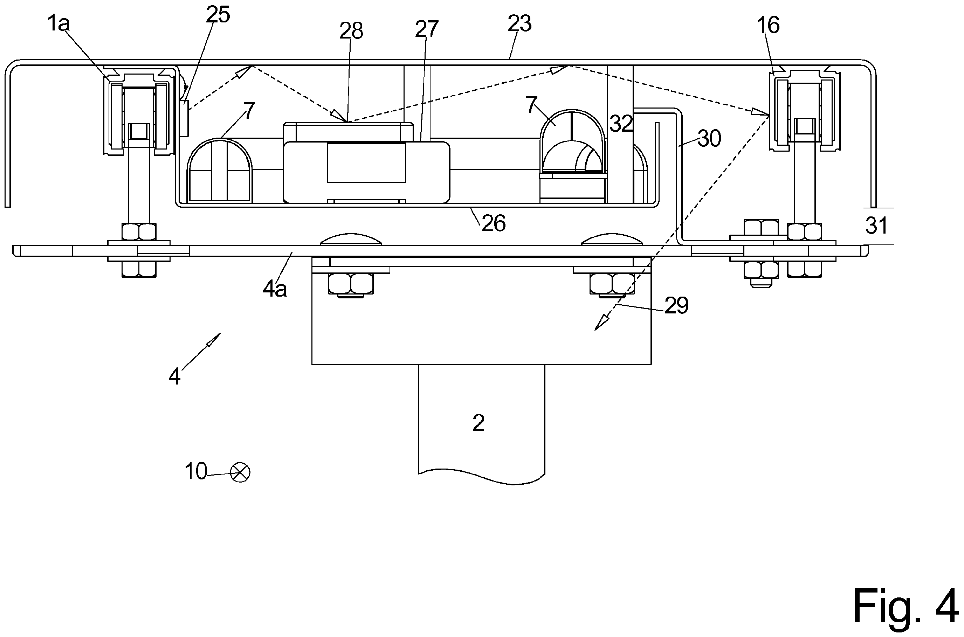

- Fig. **4**:: einen vergrößerten Querschnitt durch die Führungsschiene.

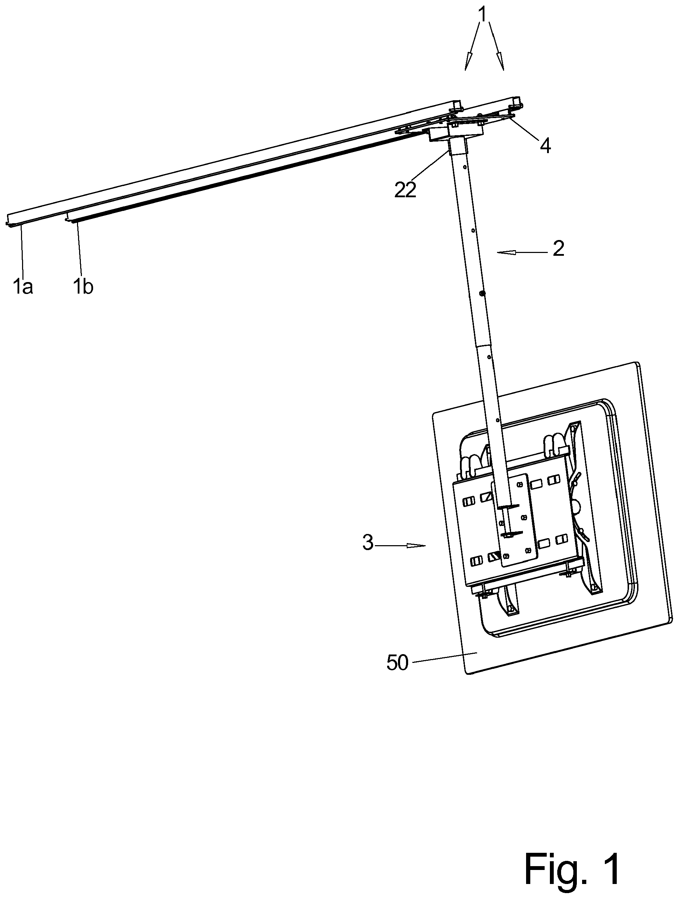

Wie in **Figur 1** sowie in den Ansichten der **Figuren 2**a-d dargestellt, umfasst der Grundaufbau der Halterung eine in einer Führungs-Ebene verlaufende Führungsschiene **1,** einen daran entlang verfahrbaren Führungsschlitten **4,** einen Haltearm **2,** eine Haltearmaufnahme **22** für den Haltearm **2** am Führungsschlitten **4** sowie eine Befestigungsvorrichtung **3** am anderen Ende des Haltearmes **2,** an der der Bildschirm **50** befestigt ist.

Die Führungsschiene **1** umfasst zwei Führungen **1**a b - wie im Detail in **Figur 4** dargestellt und erläutert - kann aber auch mehrfach nebeneinander mit entsprechend angepasstem Führungsschlitten **4** zum Einsatz kommen.

Nicht dargestellt ist, dass die Führungsschiene **1** und deren Führungen **1**a, b in ihrer durch diese beiden Führungen **1**a, b definierten Verlaufs-Ebene auch Kurven, also Biegungen, aufweisen kann, wobei dann der Führungsschlitten **4** so ausgebildet ist, dass er diese Kurven auch durchfahren kann.

Des Weiteren kann die Führungsschiene **1** je nach Ausführungsform horizontal, vertikal oder auch schräg an der Decke, einer Wand oder auf dem Boden angebracht werden.

Dabei kann - siehe Figur **2**a - je ein Trum der in der Aufsicht U-förmigen Kabelkette **7** an je einer der Führungen **1**a, b entlang laufen. Wenn die Kabelkette **7** von unten nicht sichtbar sein soll, muss darunter zwischen den Führungen **1**a, b eine Abdeckung **23** angebracht sein.

Figur **2**e zeigt eine Lösung in der Aufsicht von unten, bei der beide Trume der Kabelkette **7** nahe der einen Führung **1**a verlaufen, und die Abdeckung **23** sich von dieser Führung **1**a aus nur in der Breite der Kabelkette **7** erstrecken kann.

Der Führungsschlitten **4** verfügt über eine Haltearmaufnahme **22** für die Aufnahme des Haltearms **2.** Die Haltearmaufnahme **22** kann entweder starr mit dem Haltearm **2** verbunden sein oder um eine Neigungsachse **21**a, die parallel oder auch quer zur Verlaufsrichtung der Führungsschiene **1** verläuft, geneigt sein und kann in einer gewünschten Position fixiert werden.

Am von der Führungsschiene abgewandten Ende des Haltearms **2** ist die Befestigungsvorrichtung **3** angebracht. Der Bildschirm **50** ist mit der Befestigungsvorrichtung **3** um die Erstreckungsrichtung **20** des Haltearmes **2** drehbar befestigt.

Der Haltearm **2** ist manuell oder auch automatisch mit Hilfe eines Motors in der Länge veränderbar.

Zudem ist er gegenüber dem gegenüber der Befestigungsvorrichtung **3** um eine horizontale Neigungsachse **21**b, die parallel zur Verlaufsrichtung **10** der Führungsschiene **1** verläuft neigbar verbunden und kann in jeder Lage fixiert werden.

Sofern ein elektrisches Gerät, insbesondere ein Bildschirm **50,** zur Befestigung vorgesehen ist, muss eine längenveränderbare Kabelzuführung entlang der Führungsscheine **1** über den Führungsschlitten **4,** entlang oder durch den Haltearm **2** zu der Befestigungsvorrichtung **3** erfolgen. Die Kabelzuführung kann hierbei innerhalb der Führungsschiene **1** insbesondere zwischen den Führungen **1**a, b beispielsweise mit Hilfe einer Kabelkette **7,** erfolgen. Des Weiteren ist einen Schallreflektor **5** vorgesehen, welcher z.B. an der Rückseite der Befestigungsvorrichtung **3** und/oder am Haltearm **2** angebracht wird und nur in Figur **2**c und Figur **3** dargestellt ist.

Dieser soll, insbesondere bei einem Bildschirm **50,** welcher einen oder mehrere rückwärtige Lautsprecher besitzt, den Schall zur besseren klanglichen Darbietung, insbesondere wenn sich der Bildschirm **50** im freien Raum befindet, nach vorne reflektieren.

Dort ist auch besser zu erkennen, dass der teleskopierbare Haltearm mittels eines Schnellverschlusses **24** leicht in der Länge einstellbar ist.

Im z.B. inneren Teleskopteil sind in der Höhe beabstandet Löcher angeordnet, in die ein Stift des Schnellverschlusses **24,** der am Ende des äußeren Teleskopteiles angeordnet ist und gegen das innere Teleskopteil gerichtet ist, einrasten kann.

Es kann auch die hintere Abdeckvorrichtung **6** z. B. in Kastenform (in Figur **2**c) vorgesehen sein, die z.B. in der Befestigungsvorrichtung **3** befestigt sein kann und die gesamte Befestigungsvorrichtung **3** von der Rückseite her optisch abdeckt. Diese kann auch mit dem Schallreflektor 5 zusammen z. B. einstückig ausgebildet sein und insgesamt auf der Rückseite der Befestigungsvorrichtung **3** angeordnet sein.

Des Weiteren ist (in Figur **2**c) eine optionale Erweiterung um eine Frontabdeckung **9** vorgesehen, die auf der Befestigungsvorrichtung **3** oder dem Bildschirm **50** angebracht ist, welche bei Bedarf vor den Bildschirm **50** vorgezogen werden kann. Diese Frontabdeckung **9** kann insbesondere aus einem um einen Wickelkörper gewickelten, auf Stoff gedruckten, Bild bestehen.

Als eine weitere Ergänzung kann - wie in Figuren **2**b-d dargestellt - am Haltearm **2** eine zusätzliche Gerätehalterung **8** in Form einer horizontal liegenden Platte, in diesem Fall nahe unter dem Führungsschlitten **4,** insbesondere für das Daraufstellen von einem Wiedergabe-/Speichergerät angebracht werden.

Figur **3** zeigt eine Lösung in der Seitenansicht, bei der die Gerätehalterung besser zugänglich im Abstand unterhalb der Befestigungsvorrichtung **3** und damit relativ nahe an einem daran befestigten Bildschirm angeordnet ist.

**Figur 4** zeigt die Führungsschiene **1** in einer vergrößerten Querschnittsdarstellung:
Daraus ist ersichtlich, dass die Führungsschiene **1** eine erste Abdeckung **23** umfasst, die im Querschnitt U-förmig ausgebildet ist und bei Montage der Führungsschiene **1** an der Decke daran mit nach unten weisender Öffnung montiert wird.

An der Unterseite dieser Abdeckung **23** sind in den seitlichen Randbereichen je eine der beiden Führungen **1**a, b befestigt, entlang denen oder in denen der unterhalb der Führungsschiene **1** angeordnete Führungsschlitten **4** läuft, der zu diesem Zweck nach oben weisend wenigstens je einen Arm pro Führung **1**a, b aufweist, die die jeweilige Führung **1**a, b erreichen.

Der Führungsschlitten **4** umfasst eine Schlittenplatte **4**a, die etwa die Breite der ersten Abdeckung **23** besitzt, und an deren Unterseite der Haltearm **2** befestigt ist und von deren Oberseite ein S-förmig gekröpftes Blech - das in Verlaufsrichtung **10** höchstens so lang ist wie die die Schlittenplatte **4**a - als Kabelträger **30** nach oben ragt, an dem die aus der Kabelkette **7** herangeführten - nicht dargestellten - Kabel befestigt werden.

Im mittleren Bereich des Freiraumes des Querschnittes dieser ersten Abdeckung **23,** also ein Teil-Bereich des Querabstandes zwischen den beiden Führungen **1**a, b, ist nach unten abgedeckt mittels einer zweiten, ebenfalls im Querschnitt wenigstens U-förmigen, Abdeckung **26,** deren Breite jedoch geringer ist als die innere freie Breite der ersten Abdeckung **23,** die mit ihrer Öffnung nach oben weisend an der ersten Abdeckung **1** befestigt ist.

Sie weist mit ihren frei endenden Schenkeln in Richtung Inneres der ersten Abdeckung **23,** wobei der in Fig. **4** linke frei endende Schenkel am Ende nochmals nach außen gekröpft ist und zwischen der Führung **1**a und der Unterseite der ersten Abdeckung **23** verschraubt ist, während der andere, rechte Bereich der Abdeckung **26** mittels Stehbolzen oder ähnlichem an der Unterseite der ersten Abdeckung **23** verschraubt ist, aber im Querschnitt in der Höhe ein Höhenabstand zwischen dem Ende des frei endenden, hier rechten, Schenkel und der Unterseite der ersten Abdeckung **23** verbleibt.

Im inneren Freiraumes des Querschnittes dieser ersten Abdeckung **23** auf dessen Oberseite, also zwischen den beiden Führungen **1**a, b, verläuft die Kabelkette **7** und auch ein notwendiger Transformator **28** sowie die Steuerung in Form eines Controllers **27** sind hier untergebracht und werden dadurch von dieser zweiten Abdeckung **26** optisch nach unten abdeckt.

Beide Abdeckungen **23, 26** erstrecken sich über die gesamte Länge der Führungsschiene **1.**

Auf der Innenseite desjenigen Schenkels der zweiten Abdeckung **26,** der zwischen der Führung **1**a und der Unterseite der ersten Abdeckung **23** endet, hier des linken Schenkels, ist ein in Längsrichtung vorzugsweise entlang der gesamten Erstreckung der Führungsschiene **1** verlaufendes LED-Band **25** als Lichtquelle angeordnet.

Der Führungsschlitten **4** läuft im Abstand, hier in einem Höhen-Abstand **31,** zu den frei endenden Schenkeln der ersten Abdeckung **23,** und durch diesen Abstand kann zumindest auf der dem LED-Band **25** gegenüberliegenden Seite des Querschnittes Licht austreten. Das LED-Band **25** kann nur auf einer Seite oder auf beiden Seiten der zweiten Abdeckung **26** angeordnet sein.

Vorzugsweise ist das LED-Band **25** dabei wie dargestellt auf der zur Längsmitte der Führungsschiene **1** hin weisenden Innenseite einer der Führungen **1**a, b angeordnet.

### BEZUGSZEICHENLISTE

- **1**: Führungsschiene
- **1**a, b: Führung
- **2**: Haltearm
- **2**a,b: Ende des Haltearmes
- **3**: Befestigungsvorrichtung
- **4**: Führungsschlitten
- **4a**: Schlittenplatte
- **5**: Schallreflektor
- **6**: Abdeckvorrichtung
- **6**a: Abdeckung
- **7**: Kabelkette
- **8**: Gerätehalterung
- **9**: Frontabdeckung
- **10**: Verlaufsrichtung
- **20**: Erstreckungsrichtung
- **21**a,b: Neigungsachse
- **22**: Haltearmaufnahme
- **23**: Abdeckung
- **24**: Schnellverschluss
- **25**: LED-Band
- **26**: Abdeckung
- **27**: Controller
- **28**: Transformator
- **29**: Lichtstrahl
- **30**: Kabelträger
- **31**: Höhen-Abstand
- **32**: Stehbolzen

- **50**: Bildschirm

## Patentansprüche

1. Halterung für einen Bildschirm (**50**), mit
- mindestens einer Führungsschiene (**1**) zum Befestigen an der Decke oder einer Wand oder dem Boden,
- einem Haltearm (**2**), der mit einem Ende (**2**a) in einer Haltearmaufnahme (**22**) eines Führungsschlittens (**4**) befestigt und mittels diesem entlang der Führungsschiene (**1**) geführt ist,
- einer Befestigungsvorrichtung (**3**), zum Befestigen des Einrichtungsgegenstandes am anderen Ende (**2**b) des Haltearmes (**2**),
wobei
- der Haltearm (**2**) in seiner Länge verstellbar ist,
- der Haltearm (**2**) relativ zu der Befestigungsvorrichtung (**3**) und/oder der Haltearmaufnahme (**22**) des Führungsschlittens (**4**) um die Erstreckungsrichtung (**20**) des Haltearms (**2**) drehbar ist,
**dadurch gekennzeichnet, dass**
- ein Schallreflektor (5) in Form einer Platte für die nach hinten gerichteten Lautsprecher des Bildschirms (50) auf der Rückseite der Befestigungsvorrichtung (3) angebracht ist.

2. Halterung nach Anspruch **1,**
**dadurch gekennzeichnet, dass**
zur Drehung und/oder die Verfahrung entlang der Führungsschiene (1) und/oder die Längenverstellung des Haltearmes (**2**) ein, insbesondere je ein, Motor, insbesondere einen Schrittmotor, vorhanden ist.

3. Halterung nach einem der vorhergehenden Ansprüche,
**dadurch gekennzeichnet, dass**
der Haltearm (**2**) gegenüber dem Führungsschlitten (**4**) um eine Neigungsachse (**21**a), die insbesondere parallel zur Verlaufsrichtung (**10**) der Führungsschiene (**1**) liegt, neigbar ist.

4. Halterung nach Anspruch **3**,
**dadurch gekennzeichnet, dass**
der Haltearm (**2**) in mehreren Neigepositionen durch eine Fixiervorrichtung (**7**) fixiert werden kann.

5. Halterung nach einem der vorhergehenden Ansprüche,
**dadurch gekennzeichnet, dass**
die Befestigungsvorrichtung (**3**) gegenüber dem Haltearm (**2**) um eine Neigungsachse (**21**b) neigbar und in mehreren Neigestellungen fixierbar ist.

6. Halterung nach einem der vorhergehenden Ansprüche,
**dadurch gekennzeichnet, dass**
der Führungsschlitten (**4**) entlang einer Gewindespindel als Führungsschiene (**1**) geführt ist.

7. Halterung nach einem der Ansprüche 2-6, **dadurch gekennzeichnet, dass**
eine Steuereinheit, insbesondere mit Fernbedienung, die die motorischen Antriebe der Halterung steuert, vorhanden ist.

8. Halterung nach einem der vorhergehenden Ansprüche,
**dadurch gekennzeichnet, dass** der Schallreflektor (**5**) in Form einer optischen Abdeckvorrichtung (**6**) für die Befestigungsvorrichtung (3) auf der Rückseite des der Befestigungsvorrichtung (**3**) angebracht ist.

9. Halterung nach einem der vorhergehenden Ansprüche,
**dadurch gekennzeichnet, dass**
der Haltearm (**2**) teleskopierbar ist, und insbesondere inneres und äußeres Teleskopteil des Haltearms (**2**) in der gewünschten Relativlage zueinander formschlüssig verrastbar sind, vorzugsweise mittels eines Schnellverschlusses (**24**).

10. Halterung nach einem der vorhergehenden Ansprüche,
**dadurch gekennzeichnet, dass**
eine Kabelzuführung, insbesondere eine Kabelkette (**7**), vorhanden ist, die innerhalb der Führungsschiene (**1**) oder zwischen den Führungen (**1**a, b) der Führungsschiene (**1**) verläuft und insbesondere auf der Unterseite von einer Abdeckung (**23**) abgedeckt ist.

11. Halterung nach einem der vorhergehenden Ansprüche,
**dadurch gekennzeichnet, dass**
in der Führungsschienen (**1**) eine Lichtquelle, insbesondere ein in VerlaufsRichtung (**10**) sich erstreckendes, LED-Band (**25**) angeordnet ist, insbesondere auf einer der gegeneinander weisenden Innenflächen einer der beiden Führungen (**1**a, b) der Führungsschienen (**1**).

12. Halterung nach einem der vorhergehenden Ansprüche,
**dadurch gekennzeichnet, dass**
die Führungsschiene (**1**) neben der Abdeckung (**23**), die nach unten offen und insbesondere im Querschnitt U-förmig ist, eine zweite Abdeckung (**26**) umfasst, die nach oben offen und insbesondere im Querschnitt wenigstens U-förmig ist, jedoch schmaler als die erste Abdeckung (**23**), und sich mit ihren frei endenden Schenkeln ins Innere der ersten Abdeckung (**23**) hinein erstreckt und in ihrem Inneren die Kabelzuführung, insbesondere die Kabelkette (**7**) aufnimmt.

13. Halterung nach Ansprüche 11 und 12, **dadurch gekennzeichnet, dass**
wenigstens auf einer Seite des Querschnittes der Führungsschiene (**1**) zwischen dem freien Ende des frei endenden Schenkels der ersten Abdeckung (**23** und dem Führungsschlitten **4** ein Abstand, insbesondere ein Höhen-Abstand (**31**) vorhanden ist, aus dem Lichtstrahlen **29** aus dem Inneren der Führungsschiene **1** austreten können.

14. Halterung nach einem der vorhergehenden Ansprüche,
**dadurch gekennzeichnet, dass**
- an dem Führungsschlitten (**4**), der Befestigungsvorrichtung (**3**) oder dem Haltearm (**2**) eine zusätzliche Ablage (**8**), insbesondere für Lautsprecher, Multimedia-PCs oder Receiver, angebracht ist, und/oder
- der Führungsschlitten (**4**) an der Führungsschiene (**1**) an unterschiedlichen Längs-Positionen fixiert werden kann.

15. Halterung nach einem der vorhergehenden Ansprüche,
**dadurch gekennzeichnet, dass**
- eine Frontalabdeckung (**9**) an der Befestigungsvorrichtung (**3**) oder dem Bildschirm (**50**) angebracht ist, welche auf die Vorderseite des Bildschirmes (**50**) verlagert werden kann, und/oder
- der Führungsschlitten (**4**) so ausgebildet ist, dass er in der Lage ist, auch Kurven der Führungsschiene (**1**) zu durchfahren.

## Claims

1. A support for a screen (50), the support comprising:
- at least one support rail (1) for attachment at a ceiling or at a wall or a floor,
- a support arm (2) that is attached with one end (2a) in a support arm receiver (22) of a support slide (4) and supported by the support slide along the support rail (1),
- an attachment device (3) for attaching a piece of equipment at another end (2b) of the support arm (2),
wherein
- the support arm (2) is length adjustable
- the support arm (2) is rotatable relative to the attachment device (3), and/or relative to the support arm receiver (22) of the support slide (4) about the extension direction (20) of the support arm (2),
**characterized in that**
- a sound reflector (5) configured as a plate for backward oriented speakers of the screen (50) is attached at a back side of the attachment device (3).

2. The support according to claim 1,
**characterized in that**
a motor, in particular a respective motor, in particular a stepper motor is provided for rotating and/or moving the support arm (2) along the support rail (1) and/or length adjusting the support arm (2).

3. The support according to one of the preceding claims,
**characterized in that**
the support arm (2) is inclinable relative to the support slide (4) about an inclination axis (21a) which is in particular parallel to an orientation (10) of the support rail (1).

4. The support according to claim 3,
**characterized in that**
the support arm (2) is fixable in several inclination positions by a fixing device (7).

5. The support according to one of the preceding claims,
**characterized in that**
the attachment device (3) is inclinable relative to the support arm (2) about an inclination axis (21b) and fixable in plural inclination positions.

6. The support according to one of the preceding claims,
**characterized in that** the support slide (4) is supported along a threaded spindle that forms the support rail (1).

7. The support according to one of the claims 2 - 6,
**characterized in that**
a control unit, in particular with a remote control is provided which controls motor drives of the support.

8. The support according to one of the preceding claims,
**characterized in that** the sound reflector (5) is configured as an optical cover (6) for the attachment device (3) and attached at a back side of the attachment device (3).

9. The support according to one of the preceding claims,
**characterized in that**
the support arm (2) is telescope able and in particular an inner and an outer telescoping element of the support arm (2) are interlock able relative to each other in a form locking manner in a desired relative orientation, advantageously by a quick lock (24).

10. The support according to one of the preceding claims,
**characterized in that**
a cable feed, in particular a cable chain (7) is provided that extends within the support rail (1) or between the supports (1a, b) of the support rail (1) and which is covered in particular on a bottom side by a cover (23).

11. The support according to one of the preceding claims,
**characterized in that**
a light source in particular a LED band (25) that extends in the orientation (10) is arranged in the at least one support rail (1), in particular on an inner surface of one of the two supports (1a, b) of the at least one support rail (1) that are oriented towards each other.

12. The support according to one of the preceding claims,
**characterized in that**
the support rail (1) includes in addition to the cover (23) which is open in an downward direction and in particular has a U-shaped cross section, a second cover (26) which is open in an upward direction and in particular has at least an U-shaped cross section which, however, is narrower than the first cover (23) and extends with its freely terminating arms into an interior of the first cover (23) and which receives the cable support, in particular the cable chain (7) in its interior.

13. The support according to claims 11 and 12,
**characterized in that**
a gap, in particular an elevation gap (31) is provided at least on one side of the cross section of the support rail (1) between a free end of the freely terminating arm of the first cover (23) and the support slide (4) wherein light beams (29) can exit through the gap from an interior of the support rail (1).

14. The support according to one of the preceding claims,
**characterized in that**
- an additional support (8), in particular for speakers, multi-media PCs or receivers is attached at the support slide (4), the attachment device (3) or the support arm (2),
and/or
- the support slide (4) is fixable at the support rail (1) at different longitudinal positions.

15. The support according to one of the preceding claims,
**characterized in that**
- a front cover (9) is attached at the attachment device (3) or at the screen (50) wherein the front cover is displaceable to the front side of the screen (50), and/or
- the support slide (4) is configured to also travel through curves in the support rail (1).

## Revendications

1. Support pour un moniteur (**50**) avec
- au moins un rail de guidage (**1**) pour une fixation au plafond ou au mur ou au sol,
- un bras de support (**2**) qui est fixé par une extrémité (**2**a) dans une réception de bras de support (**22**) d'un chariot de guidage (**4**) est qui est guidé le long du rail de guidage (**1**) par ce dernier,
- un dispositif de fixation (**3**) pour fixer l'article de mobilier à l'autre extrémité (**2**b) du bras de support (**2**),
où
- la longueur du bras de support (**2**) est réglable,
- le bras de support (**2**) peut être pivoté par rapport au dispositif de fixation (**3**) et/ou par rapport à la réception de bras de support (**22**) du chariot de guidage (**4**) autour du sens d'extension (**20**) du bras de support (**2**), **caractérisé en ce que**
- un réflecteur sonore (**5**) sous la forme d'une plaque est monté à l'arrière du dispositif de fixation (**3**) pour les haut-parleurs orientés vers l'arrière du moniteur (**50**).

2. Support selon la revendication **1**,
**caractérisé en ce que**
pour le pivotement et/ou le mouvement le long du rail de guidage (**1**) et/ou le réglage longitudinale du bras de support (**2**), un moteur, en particulier un moteur respectif, est prévu, en particulier un moteur pas-à-pas.

3. Support selon une des revendications précédentes,
**caractérisé en ce que**
le bras de support (**2**) peut être incliné par rapport au chariot de guidage (**4**) autour d'un axe d'inclinaison (**21**a) qui est en particulier parallèle au sens d'extension (**10**) du rail de guidage (**1**).

4. Support selon la revendication 3,
**caractérisé en ce que**
le bras de support (**2**) peut être fixé par un dispositif de fixation (**7**) dans plusieurs positions d'inclinaison.

5. Support selon une des revendications précédentes,
**caractérisé en ce que**
le dispositif de fixation (**3**) peut être incliné par rapport au bras de support (**2**) autour d'un axe d'inclinaison (**21**b) et peut être fixé dans plusieurs positions d'inclinaison.

6. Support selon une des revendications précédentes,
**caractérisé en ce que**
le chariot de guidage (**4**) est guidé en tant que rail de guidage (**1**) le long d'une broche filetée (**4**).

7. Support selon une des revendications 2-6,
**caractérisé par**
la présence d'une unité de commande, en particulier avec une télécommande, qui commande les entraînements motorisés du support.

8. Support selon une des revendications précédentes,
**caractérisé en ce que**
le réflecteur sonore (**5**) est monté sous la forme d'un dispositif de recouvrement optique (**6**) pour le dispositif de fixation (**3**) à l'arrière du dispositif de fixation (**3**).

9. Support selon une des revendications précédentes,
**caractérisé en ce que**
le bras de support (**2**) est télescopique et **en ce qu'**en particulier les parties intérieure et extérieure du bras de support (**2**) peuvent être verrouillées de manière solidaire l'une à l'autre dans la position relative désirée, de préférence par une fermeture rapide (**24**).

10. Support selon une des revendications précédentes,
**caractérisé par**
la présence d'un conduit de câble, en particulier d'une chaîne de câble (**7**) qui s'étend dans le rail de guidage (**1**) ou entre les guidages (**1**a, b) du rail de guidage (**1**) et est recouverte par un recouvrement (**23**) en particulier sur la face inférieure.

11. Support selon une des revendications précédentes,
**caractérisé en ce que**
une source de lumière est arrangée dans le rail de guidage (**1**), en particulier une bande LED (**25**) s'étendant dans le sens d'extension (**10**), en particulier sur une des faces intérieures orientés de manière opposée d'un des deux guidages (**1**a, b) du rail de guidage (**1**).

12. Support selon une des revendications précédentes,
**caractérisé en ce que**
le rail de guidage (**1**) comprend en outre du recouvrement (**23**) ouvert vers le bas et avec en particulier une section transversale en forme de U un deuxième recouvrement (**26**) ouvert vers le haut et avec en particulier une section transversale au moins en forme de U, mais plus étroit que le premier recouvrement (**23**) qui s'étend avec ses bras se terminant librement dans l'intérieur du premier recouvrement (**23**) et reçoit dans son intérieur le conduit de câble, en particulier la chaîne de câble (**7**).

13. Support selon les revendications 11 et 12,
**caractérisé par**
la présence d'une distance, en particulier une différence en hauteur (**31**) au moins sur un côté de la section transversale du rail de guidage (**1**), entre l'extrémité libre du bras se terminant librement du premier recouvrement (**23**) et le chariot de guidage (**4**), où des rayons de lumière (**29**) peuvent sortir de l'intérieur du rail de guidage (**1**).

14. Support selon une des revendications précédentes,
**caractérisé en ce que**
- une surface d'appoint (**8**) supplémentaire est montée au chariot de guidage (**4**), au dispositif de fixation (**3**) ou au bras de support (**2**),en particulier pour des haut-parleurs, des ordinateurs multimédia ou des récepteurs, et/ou
- le chariot de guidage (**4**) peut être fixé au rail de guidage (**1**) dans des positions longitudinales différentes.

15. Support selon une des revendications précédentes,
**caractérisé en ce que**
- un recouvrement frontal (**9**) est monté au dispositif de fixation (**3**) ou au moniteur (**50**) qui peut être déplacé vers l'avant du moniteur (**50**), et/ou
- le chariot de guidage (**4**) est adapté de sorte qu'il est en mesure de passer aussi par des virages du rail de guidage (**1**).
